# EUROPEAN PATENT APPLICATION

(11) **EP 3 656 596 A1**
(43) Date of publication of application: **27.05.2020**
(21) Application number: 18834894.0
(22) Date of filing: 08.05.2018
(51) Int. Cl.: B60K 26/02, G05G 1/30, G05G 1/38, G05G 5/03

(54) **SUDDEN START PREVENTION DEVICE**

(30) Priority: 20.07.2017 JP 2017140421
(71) Applicant: Mitsuba Corporation, Kiryu-shi Gunma 376-8555 (JP)
(72) Inventor: MARUYAMA, Tsuyoshi, Kiryu-shi Gunma 376-8555 (JP); INAGAKI, Yohei, Kiryu-shi Gunma 376-8555 (JP); ONOZAWA, Hiroshi, Kiryu-shi Gunma 376-8555 (JP); OKOCHI, Susumu, Kiryu-shi Gunma 376-8555 (JP)
(74) Representative: Locas, Davide
(86) International application number: PCT/JP2018/017723
(87) International publication number: WO 2019/017041

(57) **Abstract**

A sudden start preventing apparatus includes: a controller 40; a motor unit 20 driven by the controller 40; a rotation sensor 38 for detecting an operating state of an acceleration pedal; and an erroneous operation determining unit 42 provided in the controller 40 and storing a comparison threshold value HI to be compared with a count value CPS of a pulse signal PS from the rotation sensor 38, the controller 40 driving the motor unit 20 to push the acceleration pedal back in a direction opposite to its operating direction when the erroneous operation determining unit 42 determines that the count value CPS is equal to or greater than the comparison threshold value TH1.

## Description

### TECHNICAL FIELD

The present invention relates to a sudden start preventing apparatus for preventing a vehicle from suddenly starting due to an erroneous operation of an accelerator pedal.

### BACKGROUND ART

For example, Patent Document 1 discloses a sudden start preventing apparatus that monitors various pieces of information (vehicle state signals) on a vehicle side in order to solve some problems caused by the erroneous operation of the accelerator pedal, and performs a forcible engine stop etc. based on a monitored result(s), thereby preventing the vehicle from suddenly starting.

Additionally, Patent Document 2 discloses a reaction force pedal apparatus that has, as a function of notifying a driver (operator) of an operating state of the accelerator pedal, a function of generating a reaction force with respect to a driver's operation of the accelerator pedal.

### RELATED ART DOCUMENTS

### PATENT DOCUMENTS

Patent Document 1: Japanese Patent Application Laid-open No. 2010-095162
Patent Document 2: International Publication No. WO 2013/099581

### SUMMARY OF THE INVENTION

### PROBLEMS TO BE SOLVED BY THE INVENTION

However, in techniques disclosed in Patent Documents 1 and 2, when a sudden start preventing apparatus (new system) is to be retrofitted to an existing vehicle, a new system(s) requires such a construction as to be installed in an in-vehicle controller that is mounted on the vehicle. In this case, in order to handle an important signal(s) about a sudden start of the vehicle, the construction requires being securely wired so as to make no mistake. Namely, a skilled professional staff member(s) needs to reliably (surely) perform wiring work, and the system cannot be easily retrofitted by an amateur(s) accordingly.

Additionally, in designing etc. a vehicle(s), causing the in-vehicle controller and the new system to cooperate (align) with each other has required adjusting control content (control amount etc.) on a vehicle side or adjusting control content (control amount etc.) on a new system side. Namely, a relatively long time is required for a vehicle manufacturer(s) and a parts manufacturer(s) to make these adjustments, and such a problem has arisen that it takes a long time before commercialization (productization).

An object of the present invention is to provide a sudden start preventing apparatus that does not require various pieces of information on the vehicle side and can be easily retrofitted also to an existing vehicle(s).

### MEANS FOR SOLVING THE PROBLEMS

According to one embodiment of the present invention, a sudden start preventing apparatus that prevents a vehicle from suddenly starting due to an erroneous operation of an accelerator pedal, the sudden start preventing apparatus including: a controller; an actuator driven by the controller; an operation detecting unit that detects an operating state of the accelerator pedal; and a signal comparing unit provided in the controller, and storing a threshold value to be compared with a detection signal from the operation detecting unit, in which the controller drives the actuator to push the accelerator pedal back in a direction opposite to an operating direction of the accelerator pedal when the signal comparing unit determines that the detection signal is equal to or greater than the threshold value.

According to another embodiment, the sudden start preventing apparatus further includes a rotating shaft rotated by an operation of the accelerator pedal, in which the operation detecting unit is a rotation sensor that detects a rotational state of the rotating shaft.

According to another embodiment, the operation detecting unit is a pedaling force sensor provided on the accelerator pedal and detecting an operator's pedaling force.

According to yet another embodiment, an in-vehicle controller mounted on the vehicle is connected to the controller, and the controller prohibits the actuator from being driven based on an input of a travel signal from the in-vehicle controller, the travel signal indicating that the vehicle is traveling.

According to the other embodiment, the signal comparing unit measures a duration time during which the detection signal is equal to or greater than the threshold value, and the controller drives the actuator to push the acceleration pedal back in a direction opposite to an operating direction of the acceleration pedal when the signal comparing unit determines that the detection signal is equal to or greater than the threshold value and that the duration time is equal to or greater than a predetermined time.

### EFFECTS OF THE INVENTION

The present invention includes: a controller; an actuator driven by the controller; an operation detecting unit that detects an operating state of the accelerator pedal; and a signal comparing unit provided in the controller, and storing a threshold value to be compared with a detection signal from the operation detecting unit, in which the controller drives the actuator to push the accelerator pedal back in a direction opposite to an operating direction of the accelerator pedal when the signal comparing unit determines that the detection signal is equal to or greater than the threshold value.

Form the above, the present invention prevents the acceleration pedal from erroneously starting without requiring various pieces of information (vehicle state signal) of a vehicle side, thereby making it possible to suppress a sudden start of the vehicle. This brings unnecessity of complicated wiring work, and makes it possible to easily retrofit the present invention to existing vehicles. In this case, the present invention requires no complicated wiring work, thereby being capable of being easily retrofitted to the existing vehicles. In this case, regardless of model years of the vehicles, for example, the present invention can be easily retrofitted also to old vehicles having no electronic control.

### BRIEF DESCRIPTIONS OF THE DRAWINGS

FIG. 1 is a perspective view showing a sudden start preventing apparatus according to the present invention;
FIG. 2 is sectional view of a motor unit;
FIG. 3 is a perspective view for explaining an internal structure of a gear unit;
FIG. 4 is a block diagram for explaining a controller of the sudden start preventing apparatus;
FIG. 5 is a drawing corresponding to FIG. 1 and showing a sudden start preventing apparatus according to a second embodiment;
FIG. 6 is a drawing corresponding to FIG. 4 and showing the sudden start preventing apparatus of FIG. 5;
FIG. 7 is a drawing corresponding to FIG. 4 and showing a sudden start preventing apparatus according to a third embodiment;
FIG. 8 is a drawing corresponding to FIG. 4 and showing a sudden start preventing apparatus according to a fourth embodiment; and
FIG. 9 is a drawing for explaining behavior of an erroneous operation determining unit in the sudden start preventing apparatus of FIG. 4.

### DETAILED DESCRIPTION OF PREFERRED EMBODIMENTS

Hereinafter, a first embodiment of the present invention will be described in detail with reference to the drawings.

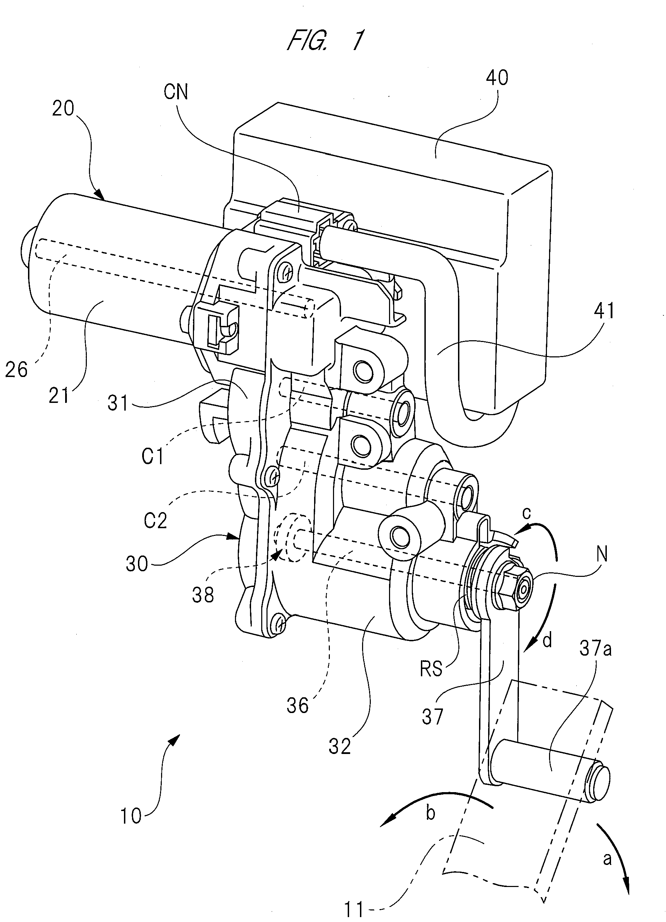

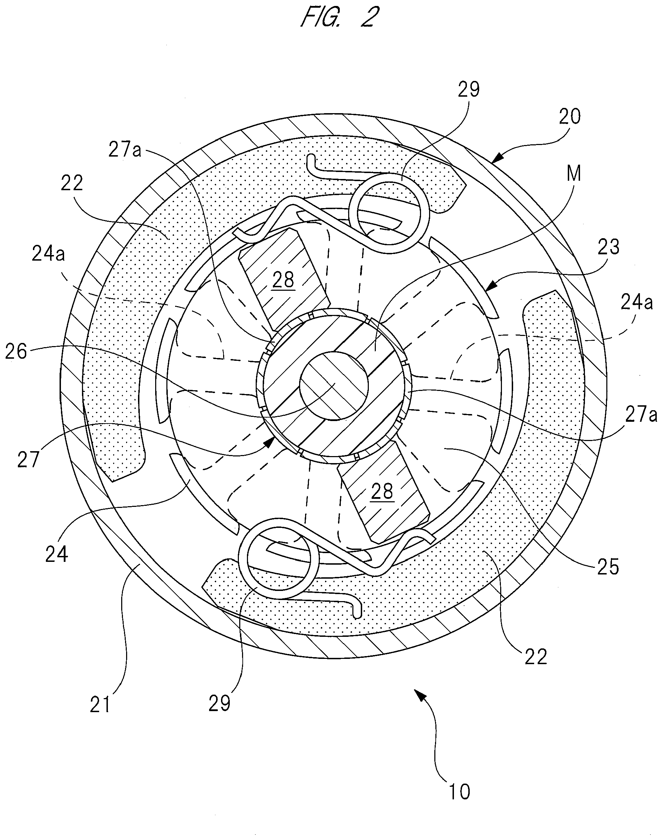

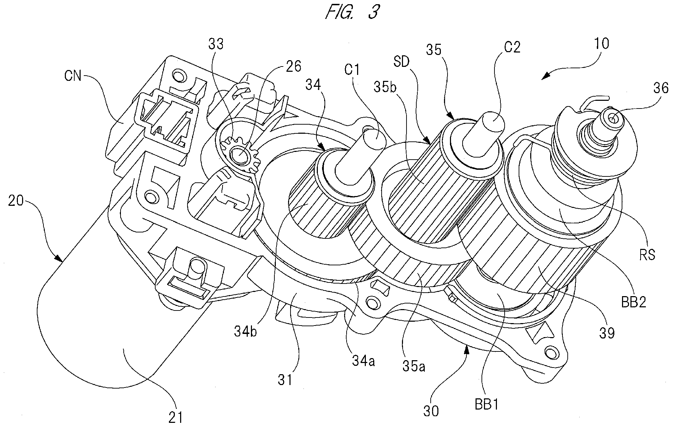

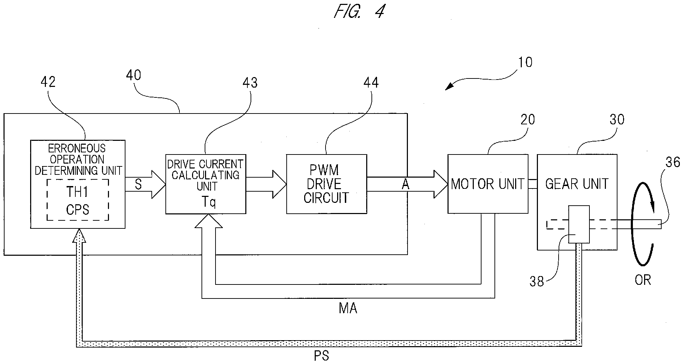

FIG. 1 is a perspective view showing a sudden start preventing apparatus according to the present invention; FIG. 2 is a sectional view of a motor unit; and FIG. 3 is a perspective view for explaining an internal structure of a gear unit; and FIG. 4 is a block diagram for explaining a controller of the sudden start preventing apparatus.

A sudden start preventing apparatus 10 shown in FIG. 1 is an apparatus mounted on a vehicle (not shown) that travels by using, as a power source, one or both of an engine and an electric motor. The sudden start preventing apparatus 10 is provided in the vicinity of an accelerator pedal 11 that controls an output of a power source, and the apparatus applies a reaction force to the accelerator pedal 11 operated by a driver (operator) as necessary.

The accelerator pedal 11 to which the reaction force is applied by the sudden start preventing apparatus 10 is rotatable within a predetermined angle range centered about a supporting shaft (not shown). Specifically, an opposite side to a supporting shaft side along a longitudinal direction of the accelerator pedal 11 is supported by an arm member 37 of the sudden start preventing apparatus 10. The accelerator pedal 11 is held (kept) at an initial position shown in FIG. 1 by an energizing force of a return spring RS which is provided in the vicinity of the arm member 37 of the sudden start preventing apparatus 10. The accelerator pedal 11 is bidirectionally rotated within an angle range of about 30° from the initial position against the energizing force of the return spring RS by an driver's stepping operation.

When the accelerator pedal 11 is depressed by the driver, i.e., when an operating force (pedaling force) of predetermined magnitude is applied to the accelerator pedal 11, the accelerator pedal 11 is rotated in a depressing direction (direction of an arrow a) against the energizing force of the return spring RS. When the accelerator pedal 11 is rotated in the depressing direction, an output of the power source is increased according to its rotational angle.

To the contrary, when the driver releases the stepping on the accelerator pedal 11, i.e., when a load (application) of the operating force to the accelerator pedal 11 is released, the accelerator pedal 11 is rotated in a returning direction (direction of an arrow b) reverse to the depressing direction by the energizing force of the return spring RS and returns to the initial position. As the accelerator pedal 11 rotates in the returning direction, the output of the power source decreases.

The sudden start preventing apparatus 10 operates so as to apply a large reaction force to the accelerator pedal 11 when the accelerator pedal 11 is erroneously operated and the vehicle is suddenly started. Specifically, the arm member 37 of the sudden start preventing apparatus 10 is pressed in a direction of an arrow c by the rotation of the accelerator pedal 11 in the depressing direction. At this time, for example, if the driver mistakes a brake pedal for the accelerator pedal 11 to depress the latter and the rotation of the accelerator pedal 11 in the depressing direction suddenly increases, the sudden start preventing apparatus 10 moves (drives) the arm member 37 in a direction of an arrow d, thereby transmitting a large reaction force to the accelerator pedal 11.

Consequently, even if the accelerator pedal 11 is suddenly depressed due to a driver's erroneous operation (carelessness), the sudden start preventing apparatus 10 generates a reaction force larger than its pedaling force at this time, which makes it possible to prevent the vehicle from being suddenly started.

As shown in FIGS. 1 to 3, the sudden start preventing apparatus 10 includes a motor unit 20 and a gear unit 30. Here, FIG. 2 shows a sectional view of the motor unit 20 along a direction orthogonal to an axial direction of an armature shaft 26. In FIG. 3, an illustration of a gear cover 32 will be omitted for easily understanding an internal structure of the gear unit 30.

The motor unit 20 constitutes an actuator in the present invention, and includes a yoke 21 which is formed into a bottomed cylindrical shape by a deep digging process etc. of a steel plate. A pair of magnets 22 whose cross-sections are each formed in a substantially arc shape are fixed radially inside the yoke 21. These magnets 22 are arranged oppositely (180° arrangement) around a shaft center of the yoke 21.

An armature 23 is rotatably accommodated radially inside each magnet 22 through a predetermined gap. The armature 23 includes a core 24 which has been formed by laminating a plurality of steel plates, and the core 24 is radially provided with eight slots 24a. A coil 25 is wound around each of the eight slots 24a with a predetermined winding method and the predetermined number of turns.

An armature shaft 26 is fixed to a rotational center of the core 24. A commutator 27 is fixed in the vicinity of the core 24 along an axial direction of the armature shaft 26. The commutator 27 includes eight commutator pieces 27a according to the number of slots 24a. These commutator pieces 27a are hardened by a mold resin M so as to form an annular shape. The coil 25 wound around the slot 24a is electrically connected to each of the commutator pieces 27a.

A pair of brushes 28 is in sliding contact with an outer peripheral portion of the commutator 27. The pair of brushes 28 is arranged oppositely (180° arrangement) around the commutator 27. Incidentally each brush 28 is movably held in (by) a not-shown brush holder. A spring member 29 is disposed (placed) on a back side of each brush 28, and each spring member 29 presses each brush 28 toward the commutator 27 with predetermined pressure. Consequently, each brush 28 is stably brought into contact with the commutator 27. Here, each spring member 29 is held by a spring holding portion (not shown) of the brush holder.

Thus, the motor unit 20 serves as a motor with a brush which has a 2-pole, 8-slot, and 2-brush structure. Then, supplying a drive current to each brush 28 brings energization of the coil 25 through the commutator 27, and generation of an electromagnetic force in the core 24. Consequently, the armature shaft 26 is rotated at a predetermined rotational rate in a predetermined rotational direction. Incidentally, the brush holder that holds each brush 28 is provided with a connector connecting portion CN (see FIG. 1) to which a controller 40 (see FIG. 4) is electrically connected.

As shown in FIG. 3, a gear case 31 is fixed to an opening of the yoke 21. The gear case 31 is formed into a substantially bathtub-like, bottomed shape which is made of an aluminum material etc., and a speed reduction mechanism SD composed of a plurality of gears is rotatably accommodated therein. The gear case 31 is closed by a gear cover 32 (see FIG. 1), the gear cover being formed into a substantially bathtub-like, bottomed shape which is made of aluminum material etc. Incidentally, the gear case 31 and the gear cover 32 that have been butted against (combined with) each other form an outline of the gear unit 30.

Here, the return spring RS is provided between the gear cover 32 and an output shaft (rotating shaft) 36. A spring force of the return spring RS holds (maintains) a position of the output shaft 36 with respect to the gear cover 32 at the initial position shown in FIG. 1.

A tip portion of the armature shaft 26 is disposed inside the gear case 31 and on a yoke 21 side (left in FIG. 3) along a longitudinal direction of the gear case 31. A pinion gear 33 is fixed to the tip portion of the armature shaft 26.

A first supporting shaft C1 made of a steel rod is provided inside the gear case 31 and in the vicinity of the armature shaft 26, and a first two-stage gear 34 is rotatably supported on the first supporting shaft C1. The first two-stage gear 34 includes a first large-diameter gear 34a meshed with the pinion gear 33, and a first small-diameter gear 34b having a smaller diameter than the first large-diameter gear 34a. Here, the pinion gear 33 and the first large-diameter gear 34a form a first speed reduction unit.

A second supporting shaft C2 made of a steel rod is provided inside the gear case 31 and on a side opposite to a pinion gear 33 side along the longitudinal direction of the gear case 31 centered about the first supporting shaft C1. A second two-stage gear 35 is rotatably supported on the second supporting shaft C2. The second two-stage gear 35 includes a second large-diameter gear 35a meshed with the first small-diameter gear 34b, and a second small-diameter gear 35b having a smaller diameter than the second large-diameter gear 35a. Here, the first small-diameter gear 34b and the second large-diameter gear 35a form a second speed reduction unit.

A first ball bearing BB1 is mounted inside the gear case 31 and on a side opposite to the first supporting shaft C1 side along the longitudinal direction of the gear case 31 centered about the second supporting shaft C2. The first ball bearing BB1 rotatably supports a base end side of the output shaft 36. Incidentally, a second ball bearing BB2 similar to the first ball bearing BB1 is mounted also on a gear cover 32 side. The second ball bearing BB2 rotatably supports a tip side of the output shaft 36.

Further, a base end portion of the arm member 37 is fixed to the tip side of the output shaft 36 by a nut N as shown in FIG. 1. Namely, the arm member 37 is rotated together with the output shaft 36. A pedal supporting portion 37a extending in a direction orthogonal to an extending direction of the arm member 37 is provided on the tip side of the arm member 37. The pedal supporting portion 37a supports a side opposite to a supporting shaft side along a longitudinal direction of the accelerator pedal 11.

Further, a rotation sensor 38 (see FIG. 1) for detecting a rotational state of the output shaft 36 that is caused by the operation of the accelerator pedal 11 is provided on the base end side of the output shaft 36. Here, the rotation sensor 38 constitutes an operation detecting unit in the present invention, and detects an operating state of the accelerator pedal 11. Specifically, although not shown in detail, the rotation sensor 38 is configured by: an annular sensor magnet fixed to the output shaft 36; and a plurality of Hall ICs fixed to the gear case 31 and arranged around a sensor magnet. Consequently, the controller 40 can grasp (ascertain) the rotational state (rotational rate etc.) of the output shaft 36 by counting pulse signals generated from the Hall ICs.

Here, the sudden start preventing apparatus 10 of the present embodiment detects a stepping speed of the accelerator pedal 11 which has been depressed by the driver, and utilizes a detected result(s) for control for erroneous operation prevention. Therefore, the controller 40: compares count values (integrated values) of the pulse signals from the Hall ICs per unit time with a comparative threshold value TH1 (see FIG. 4) stored in advance in the controller 40; and determines, based on this comparative result(s), the rotational speed of the output shaft 36, i.e., whether or not the driver has accidentally depressed the accelerator pedal 11 suddenly.

However, the rotation sensor 38 provided on the output shaft 36 is not limited to the rotation sensor 38 that is composed of the sensor magnet and Hall ICs as described above and, for example, an acceleration sensor that can detect acceleration when the output shaft 36 is about to rotate may be provided on the output shaft 36. In this case, a signal(s) from the acceleration sensor can be used for comparison as it is and, consequently, a pulse signal counting process as described above becomes unnecessary. This makes it possible to reduce a controlling load(s) and increase a controlling speed (reacting speed) by the controller 40. Besides, some rotation sensors are utilizable regardless of their forms (structures) as long as being capable of detecting exponential (sudden) rotation of the output shaft 36.

Additionally, an output gear 39 is provided at a substantially intermediate portion of the output shaft 36 along its axial direction through a one-way clutch and a torque limiter (both not shown). The output gear 39 has a larger diameter than the second small-diameter gear 35b and meshes with the second small-diameter gear 35b. Here, the second small-diameter gear 35b and the output gear 39 form a third speed reduction unit.

Consequently, the sudden start preventing apparatus 10 of the present embodiment includes a speed reduction mechanism SD that has the first to third speed reduction units between the armature shaft 26 and the output shaft 36, thereby being configured so as to perform a three-stage speed reduction mechanism. Thus, the sudden start preventing apparatus 10 is made small in size and light in weight and achieves a high output type, thereby suppressing an increase in its overall size.

Here, the one-way clutch provided on the output shaft 36 operates so as to restrict relative rotation of a clockwise direction (direction of an arrow d in FIG. 1) of the output gear 39 with respect to the output shaft 36 and permits relative rotation of a counterclockwise direction (direction of an arrow c in FIG. 1) of the output gear 39 with respect to the output shaft 36. Namely, if a clockwise energized torque is applied to the output gear 39 from the output shaft 36, the output gear 39 becomes a connected state to (with) the output shaft 36, thereby leading to being capable of power transmission. This state is a state where the sudden start preventing apparatus 10 is being driven and a large reaction force is being transmitted to the accelerator pedal 11.

In contrast thereto, if a counterclockwise energized torque is applied to the output shaft 36 from the output gear 39, the output gear 39 is disconnected from the output shaft 36 and becomes a cut-off state, thereby leading to being incapable of power transmission to each other. This state is a state when the arm member 37 (see FIG. 1) moved in the arrow c direction is automatically returned to the initial position regardless of a drive of the output shaft 36.

Further, the torque limiter is configured to idle, for example, when the speed reduction mechanism SD bites a foreign matter(s) to become unrotatable (non-rotatable) and when the driver strongly depresses the accelerator pedal 1 1 to apply a large pedaling force to the arm member 37. Consequently, even if the sudden start preventing apparatus 10 is in a fault state, an emergency accelerator operation can be performed according to driver's intention.

As shown in FIG. 4, the motor unit 20 forming the sudden start preventing apparatus 10 is controlled by a controller 40. As shown in FIG. 1, the controller 40 is fixed to a substantially directly beside the motor unit 20 through a bracket (not shown). Namely, the controller 40 is provided integrally with the sudden start preventing apparatus 10, which makes it possible to be easily retrofitted to the vehicle.

As shown in FIG. 1, a wiring 41 is provided between the connector connecting portion CN and the controller 40 to electrically connect them. More specifically, as shown in FIG. 4, the wiring 41 is formed so that a driving current A for driving the motor unit 20, a motor-unit monitoring current MA for grasping a driving state of the motor unit 20, and a pulse signal PS from the rotation sensor 38 flow therein.

Then, the controller 40 is provided with an erroneous operation determining unit 42, a drive current calculating unit 43, and a PWM drive circuit 44.

The erroneous operation determining unit 42 constitutes a signal comparing unit in the present invention, and the pulse signal PS (see a shaded arrow in the figure) from the rotation sensor 38 is inputted to the erroneous operation determining unit 42. The erroneous operation determining unit 42 stores in advance a comparison threshold value (threshold value) TH1 which has been set to a predetermined value. Then, the erroneous operation determining unit 42 performs (executes) a comparison process for comparing a count value (detection signal) CPS of the pulse signal PS per unit time with the comparison threshold value TH1.

If a comparison result by the erroneous operation determining unit 42 is "CPS ≥ TH1", a drive command signal (trigger signal) S for driving the motor unit 20 from the erroneous operation determining unit 42 toward the drive current calculating unit 43 is outputted. Specifically, a case where the comparison result by the erroneous operation determining unit 42 is "CPS ≥ TH1" is as follows.

Namely, if the driver depresses the accelerator pedal 11 (see FIG. 1) accidentally and suddenly, the output shaft 36 is suddenly rotated and its rotational number OR is abruptly increased. Consequently, the count value CPS per unit time of the pulse signal PS from the rotation sensor 38 increases rapidly. Therefore, the count value CPS per unit time leads to being equal to or greater than the comparison threshold value TH1. From such a state, the erroneous operation determining unit 42 determines that the accelerator pedal 11 has been erroneously operated.

In contrast thereto, when a comparison result by the erroneous operation determining unit 42 is "CPS < TH1", the drive command signal S is not outputted from the erroneous operation determining unit 42. Consequently, the motor unit 20 is not driven while being stopped. Namely, when the driver normally operates (depresses) the accelerator pedal 11, the rotational number OR of the output shaft 36 becomes a low state. Thus, the count value CPS per unit time of the pulse signal PS from the rotation sensor 38 indicates a small value. From such a state, the erroneous operation determining unit 42 determines that the accelerator pedal 11 has been normally operated.

The drive current calculating unit 43 calculates a drive current A for driving the motor unit 20 with a predetermined drive torque Tq based on an input of the drive command signal S from the erroneous operation determining unit 42. Here, the predetermined drive torque Tq means a large drive torque Tq for preventing the accelerator pedal 11 from being depressed further. Consequently, the motor unit 20 is driven with the large drive torque Tq, and the accelerator pedal 11 is pushed back in a direction opposite to its operating direction, thereby bringing the vehicle being prevented from suddenly starting.

Additionally, inputted into the drive current calculating unit 43 is a current (motor-unit monitoring current MA) which is currently flowing in the motor unit 20 in order to monitor whether the motor unit 20 generates the drive torque Tq as instructed. If determining that the drive torque Tq generated by the motor unit 20 is insufficient based on the motor-unit monitoring current MA, the drive current calculating unit 43 adjusts the drive current A to increase the drive torque Tq. To the contrary, if determining that the drive torque Tq generated by the motor unit 20 is excessive, the drive current calculating unit 43 adjusts the drive current A so as to weaken (decrease) the drive torque Tq. Namely, the controller 40 performs feedback control (FB control) at a predetermined control cycle in order to drive the motor unit 20 with the drive torque Tq.

Further, the motor unit 20 is configured to be driven by the drive current A which is duty-controlled (PWM-controlled) from the PWM drive circuit 44. Thus, driving the motor unit 20 with the duty-controlled drive current A leads to suppression of heat generation of the entire controller 40 and achieves high efficiency of the controller 40.

As detailed above, the sudden start preventing apparatus 10 according to the present embodiment includes: the controller 40; the motor unit 20 driven by the controller 40; the rotation sensor 38 which detects the operated state of the accelerator pedal 11; and the erroneous operation determining unit 42 provided in the controller 40 and storing the comparison threshold value TH1 which is compared with the count value CPS of the pulse signal PS from the rotation sensor 38. If the erroneous operation determining unit 42 determines that the count value CPS is equal to or greater than the comparison threshold value TH1, the controller 40 drives the motor unit 20 to push the accelerator pedal 11 back in a direction opposite to the operating direction.

Consequently, the present embodiment prevents the accelerator pedal 11 from being erroneously operated without requiring various pieces of information (vehicle state signal) on the vehicle side, which makes it possible to suppress the sudden start of the vehicle. Accordingly, the present embodiment requires no complicated wiring work, thereby being capable of being easily retrofitted to the existing vehicles. In this case, regardless of model years of the vehicles, for example, the present embodiment can be easily retrofitted also to old vehicles having no electronic control.

Additionally, the sudden start preventing apparatus 10 according to the present embodiment has the output shaft 36 which is rotated by the operation of the accelerator pedal 11, the output shaft 36 being provided with the rotation sensor 38 for detecting the rotational state of the output shaft 36. Consequently, the sudden start preventing apparatus 10 shown in FIG. 1 can alone detect the erroneous operation (rapid stepping operation) of the accelerator pedal 11 and prevent it. Therefore, the present embodiment can be more easily retrofitted to the vehicle.

Next, a second embodiment of the present invention will be described in detail with reference to the drawings. Incidentally, portions having the same functions as those of the above-described first embodiment are denoted by the same reference numerals, and detailed description thereof will be omitted.

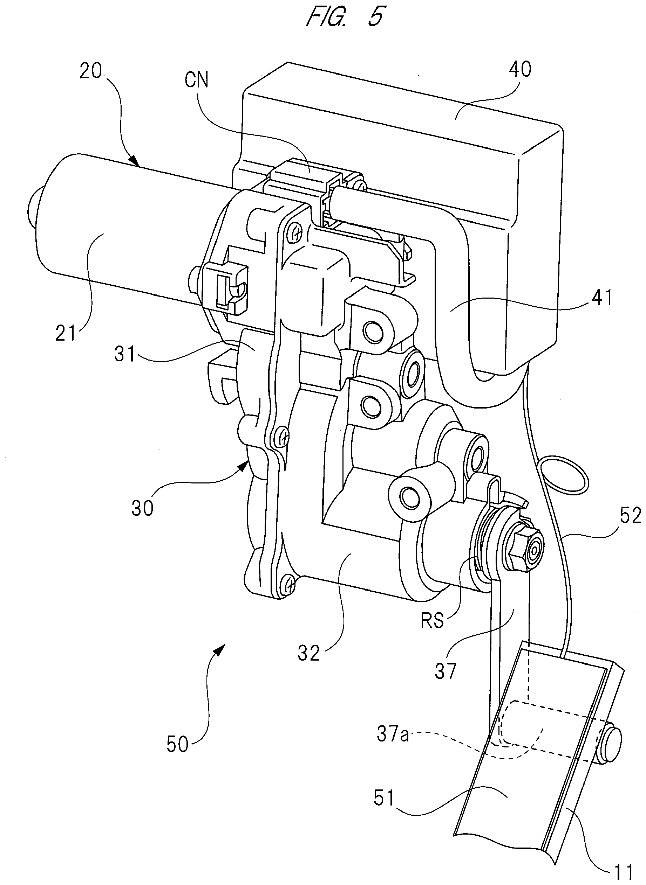

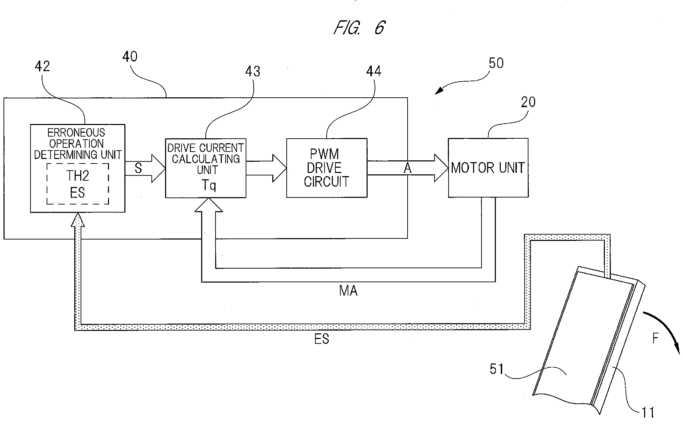

FIG. 5 shows a diagram corresponding to FIG. 1 and showing a sudden start preventing apparatus of a second embodiment, and FIG. 6 shows a diagram corresponding to FIG. 4 and showing the sudden start preventing apparatus of FIG 5.

As shown in FIGS. 5 and 6, a sudden start preventing apparatus 50 of a second embodiment is different from the sudden start preventing apparatus 10 of the first embodiment only in the operation detecting unit for detecting the operating state of the accelerator pedal 11. Specifically, in the sudden start preventing apparatus 10 of the first embodiment, the rotation sensor 38 as an operation detecting unit is provided on the base end side of the output shaft 36 and is built in the sudden start preventing apparatus 10. In contrast thereto, in the sudden start preventing apparatus 50 of the second embodiment, a pedaling force sensor 51 as an operation detecting unit is provided on the surface of the accelerator pedal 11 lying outside the sudden start preventing apparatus 50.

The pedaling force sensor 51 detects a degree of depression of the accelerator pedal 11 by the driver, i.e., the driver's pedaling force, and is formed of a sheet-like piezoelectric element. Then, if the driver erroneously operates the accelerator pedal 11 (pedaling force sensor 51) and suddenly strongly steps it with a pedaling force F, the pedaling force sensor 51 outputs a large voltage signal ES. In contrast thereto, if the driver depresses the accelerator pedal 11 (pedaling force sensor 51) with a normal operation, the pedaling force sensor 51 outputs a small voltage signal ES.

As shown in FIG. 5, a wiring 52 of the pedaling force sensor 51 is electrically connected to the controller 40. Consequently, as shown in FIG. 6, the voltage signal ES (see a shaded arrow in the figure) from the pedaling force sensor 51 is inputted into the erroneous operation determining unit 42. Then, the erroneous operation determining unit 42 executes a comparison process for comparing the inputted voltage signal ES with a comparison threshold value (threshold value) TH2 which has been set to a predetermined value.

If a comparison result by the erroneous operation determining unit 42 is "ES ≥ TH2", a drive command signal (trigger signal) S for driving the motor unit 20 is outputted from the erroneous operation determining unit 42 to the drive current calculating unit 43. In contrast thereto, if a comparison result by the erroneous operation determining unit 42 is "ES < TH2", the drive command signal S is not outputted from the erroneous operation determining unit 42. The other control contents are almost the same as those of the sudden start preventing apparatus 10 of the first embodiment.

In the sudden start preventing apparatus 50 of the second embodiment configured as described above, the sudden start preventing apparatus 50 and the pedaling force sensor 51 are separate from each other. In other respects, almost the same actions and effects as those of the above-described first embodiment can be achieved. Additionally, in the sudden start preventing apparatus 50 of the second embodiment, the voltage signal ES from the pedaling force sensor 51 is used as it is, so that the control load is reduced, which makes it possible to increase a control speed (reaction speed) by the controller 40.

Incidentally, the pedaling force sensor 51 is not limited to the sheet-like piezoelectric element provided on the surface of the accelerator pedal 11 as described above, and may adopt a structure of disposing a load cell (load sensor) between a back surface of the accelerator pedal 11 and a floor surface of the vehicle, the load cell having a strain gauge distorted by the operation of the accelerator pedal 11.

Next, a third embodiment of the present invention will be described in detail with reference to the drawings. Incidentally, portions having the same functions as those of the above-described first embodiment are denoted by the same reference numerals, and detailed description thereof will be omitted.

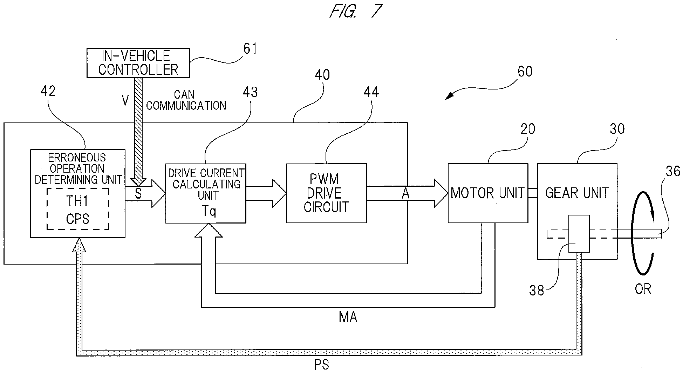

FIG. 7 shows a diagram corresponding to FIG. 4 and showing a sudden start preventing apparatus of a third embodiment.

As shown in FIG. 7, a sudden start preventing apparatus 60 of a third embodiment is different from the sudden start preventing apparatus 10 of the first embodiment in that in-vehicle controller 61 which is mounted on a vehicle as a high-grade system thereof is connected to the controller 40. Specifically, the controller 40 and the in-vehicle controller 61 can be easily connected to each other through, for example, an "OBD2 (On Board Diagnosis second generation)" standard connector used in a self-diagnosis function of the vehicle. The controller 40 is configured so that vehicle-side state signals, i.e., various state signals such as a throttle opening signal and a vehicle speed signal are inputted from the in-vehicle controller 61 by CAN communication.

If a vehicle speed signal (travel signal) V indicating that the vehicle is traveling is inputted from the in-vehicle controller 61, the controller 40 executes (performs) an interrupt process for prohibiting the sudden start preventing apparatus 60 from being operated (see a hatched arrow in the figure). Namely, when the vehicle is running (traveling), an output of the drive command signal (trigger signal) S for driving the motor unit 20 is prohibited even if the erroneous operation determining unit 42 determines "CPS ≥ TH1". Consequently, the operation of the sudden start preventing apparatus 60 (the drive of the motor unit 20) is prohibited, which permitting the rapid stepping operation of the accelerator pedal 11. This makes it possible to easily perform, for example, overtaking on an expressway or the like.

Additionally, the sudden start preventing apparatus 60 can also function as a "reaction force generating apparatus" in order to receive the vehicle-side state signal from the in-vehicle controller 61. Specifically, the controller 40 drives the motor unit 20 when the inputted throttle opening signal is large, thereby applying a reaction force to the accelerator pedal 11. Then, when the driver senses the reaction force from the sudden start preventing apparatus 60, the driver becomes aware of an excessive stepping (depressing) operation of the accelerator pedal 11 and, consequently, can switch a present travel to such a travel as to emphasize fuel efficiency.

The sudden start preventing apparatus 60 of the third embodiment configured as described above can also achieve almost the same actions and effects as those of the above-described first embodiment. In addition thereto, the sudden start preventing apparatus 60 of the third embodiment receives the vehicle-side state signal from the in-vehicle controller 61 by the CAN communication, thereby making it possible to perform various finer control methods.

Next, a fourth embodiment of the present invention will be described in detail with reference to the drawings. Incidentally, portions having the same functions as those of the above-described first embodiment are denoted by the same reference numerals, and detailed description thereof will be omitted.

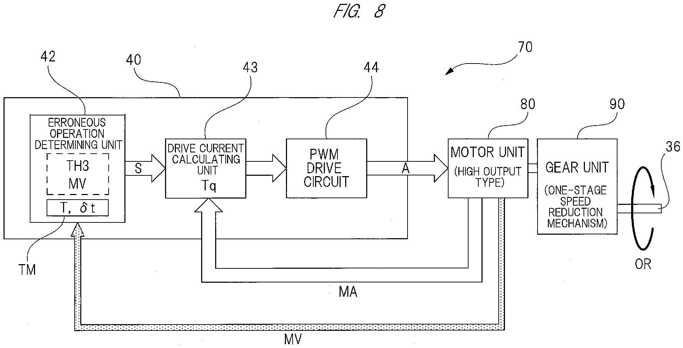

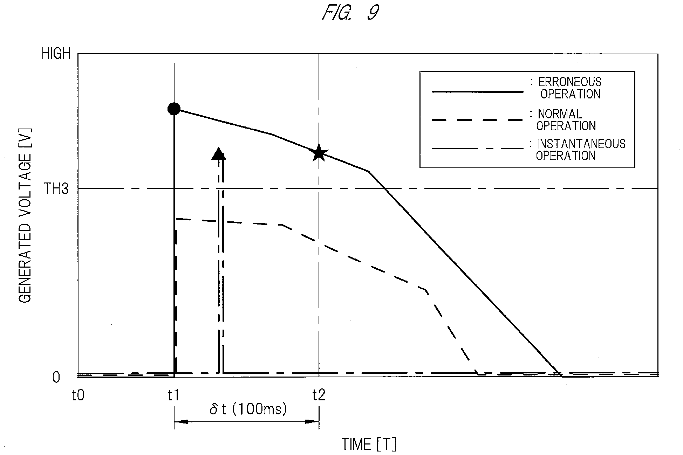

FIG. 8 is a diagram corresponding to FIG. 4 and showing a sudden start preventing apparatus of a fourth embodiment, and FIG. 9 is a diagram for explaining an operation of the erroneous operation determining unit in the sudden start preventing apparatus of FIG. 4.

As shown in FIG. 8, a sudden start preventing apparatus 70 of a fourth embodiment is different from the sudden start preventing apparatus 10 of the first embodiment (see FIG. 4) in that a "high output type" is firstly adopted as a type of a motor unit (actuator) 80. Namely, the motor unit 80 is configured to generate a larger drive torque than the motor unit 20 (see FIG. 4) of the first embodiment.

Further, the fourth embodiment is different from the first embodiment in that a "single stage reduction gear" is secondly adopted for a gear unit 90 correspondingly to the high output type motor unit 80. This reduces a reduction ratio of a speed reduction mechanism (not shown) forming the gear unit 90, thereby making it possible to easily rotate an armature shaft (not shown) of the motor unit 80 by operating the accelerator pedal 11 (see FIG. 1).

Consequently, in the sudden start preventing apparatus 70 of the fourth embodiment, operating the accelerator pedal 11 makes the armature shaft of the motor unit 80 easily rotatable and, according to a power generating amount of the motor unit 80 at this time, causes the sudden start preventing apparatus 70 (motor unit 80) to be driven. Namely, the motor unit 80 in a power generating state constitutes an operation detecting unit in the present invention.

Specifically, as shown in FIG. 8, the motor unit 80 and the erroneous operation determining unit 42 are electrically connected to each other so that a generated voltage signal (detection signal) MV from the motor unit 80 is inputted to the erroneous operation determining unit 42. Then, the erroneous operation determining unit 42 executes a comparison process for comparing the inputted generated voltage signal MV with the previously stored comparison threshold value TH3

Additionally, the erroneous operation determining unit 42 is provided with a timer unit TM, and the timer unit TM stores a comparison time δt which is previously set at a predetermined time (100 ms in the present embodiment). Then, if a comparison result by the erroneous operation determining unit 42 is "MV ≥ TH3", a time-counting process (measurement) of the timer unit TM is started. Thereafter, when the erroneous operation determining unit 42 determines that a duration time T of a "MV ≥ TH3" state is equal to or longer than the comparison time (predetermined time) δt, a drive command signal S for driving the motor unit 80 is outputted from the erroneous operation determining unit 42 toward the drive current calculating unit 43.

More specifically, as shown in a solid-line graph (erroneous operation) in FIG. 9, when the driver accidentally steps on the accelerator pedal 11 at time t1, the output shaft 36 is rapidly rotated and its rotation number OR is rapidly increased. Consequently, the generated voltage signal MV from the motor unit 80 increases rapidly. At this time, since the driver depresses the accelerator pedal 11 vigorously (at a stroke) at almost the same stepping (pedaling) force as that for a braking operation in an emergency, the generated voltage signal MV leads to greatly exceeding the comparison threshold value TH3 (black circle portion in the figure).

Thereafter, at time t2 (star portion in the figure) after δt (100 ms) has elapsed, the erroneous operation determining unit 42 outputs the drive command signal S toward the drive current calculating unit 43. Thus, after the erroneous operation and after δt has elapsed, the motor unit 80 is driven with a large drive torque Tq and the accelerator pedal 11 is pushed back in the direction opposite to the operating direction, which prevents the vehicle from suddenly starting.

Incidentally, during the normal operation of the accelerator pedal 11, the generated voltage signal MV changes (varies) gently as shown by a broken-line graph (normal operation) in FIG. 9. Namely, unlike the braking operation in an emergency, the driver gently (gradually) depresses the accelerator pedal 11. Therefore, the generated voltage signal MV at this time does not exceed the comparison threshold value TH3, and the erroneous operation determining unit 42 can easily identify the "erroneous operation" and the "normal operation".

Further, for example, when the accelerator pedal 11 is instantaneously and rapidly operated due to hooking etc. of driver's foot onto the accelerator pedal 11 at a time of the emergency braking operation by the driver, the generated voltage signal MV instantaneously rises as shown by a dash-single-dot-line graph (instantaneous operation) in FIG. 9 and may exceed the comparison threshold value TH3 (triangle marked portion in the figure). For such an "instantaneous operation", the erroneous operation determining unit 42 does not react and does not determine the "erroneous operation". Consequently, the motor unit 80 is not operated with a large driving torque Tq during the "instantaneous operation". In other words, it is effectively suppressed that the motor unit 80 is unnecessarily operated with the large driving torque Tq by the instantaneous operation of the accelerator pedal 11.

The sudden start preventing apparatus 70 of the fourth embodiment configured as described above can also achieve almost the same actions and effects as those of the above-described first embodiment. In additional thereto, in the sudden start preventing apparatus 70 of the fourth embodiment, the erroneous operation determining unit 42 measures a time T during which the generated voltage signal MV is equal to or greater than the comparison threshold value TH3, and the controller 40 drives the motor unit 80 to push back the accelerator pedal 11 in a direction opposite to the operating direction of the accelerator pedal when the erroneous operation determining unit 42 determines that the generated voltage signal MV is equal to or greater than the comparison threshold value TH3 and that the time T is equal to or greater than a comparison time δt. Therefore, it is effectively suppressed that the motor unit 80 is unnecessarily operated with the large driving torque Tq by the operation (instantaneous operation) of the accelerator pedal 11.

Incidentally, the fourth embodiment has shown that the detection signal is made the generated voltage signal MV However, instead of the generated voltage signal MV, a pulse signal PS and/or a voltage signal ES may be used as a detection signal similarly to those in the first and second embodiments.

Needless to say, the present invention is not limited to the above-described respective embodiments, and can be variously modified within a range not departing from the scope (gist) of the invention. For example, each of the above-described embodiments has shown that the speed reduction mechanism SD is set to "three stages" or "one stage" so that a reduction ratio can be obtained. However, the present invention is not limited to this, and a motor unit having a further larger output (actuator) may be employed to omit the speed reduction mechanism.

Additionally, each of the above-described embodiments has shown that the rotation sensor 38 for detecting the rotation state of the output shaft 36 and/or the pedaling force sensor 51 for detecting the degree of depression of the accelerator pedal 11 are adopted as an operation detecting unit(s). However, the present invention is not limited to this and, for example, may adopt a structure in which an acceleration sensor is mounted on a control board (not shown) constituting the controller 40. This makes it possible to detect the sudden star of the vehicle and quickly drive (actuate) the sudden start preventing apparatus. In this case, the acceleration sensor mounted on the control board constitutes an operation detecting unit in the present invention.

Further, each of the above-described embodiments has shown a case where the motor unit 20 as an actuator is a motor with a brush. However, the present invention is not limited to this, and may adopt a structure in which a brushless motor is employed as the motor unit 20 serving as an actuator.

Beside, quality of materials, shapes, dimensions, number of pieces, and installation locations, etc. of respective components in each of the above-described embodiments are arbitrary as long as the present invention can be achieved, and are not limited to those of each of the above-described embodiments.

### INDUSTRIAL APPLICABILITY

The sudden start preventing apparatus is used to prevent the vehicle from suddenly starting due to the erroneous operation of the accelerator pedal.

## Claims

1. A sudden start preventing apparatus that prevents a vehicle from suddenly starting due to an erroneous operation of an accelerator pedal, the sudden start preventing apparatus comprising:
a controller;
an actuator driven by the controller;
an operation detecting unit that detects an operating state of the accelerator pedal; and
a signal comparing unit provided in the controller, and storing a threshold value to be compared with a detection signal from the operation detecting unit,
wherein the controller drives the actuator to push the accelerator pedal back in a direction opposite to an operating direction of the accelerator pedal when the signal comparing unit determines that the detection signal is equal to or greater than the threshold value.

2. The sudden start preventing apparatus according to claim 1, further comprising a rotating shaft rotated by an operation of the accelerator pedal,
wherein the operation detecting unit is a rotation sensor that detects a rotational state of the rotating shaft.

3. The sudden start preventing apparatus according to claim 1,
wherein the operation detecting unit is a pedaling force sensor provided on the accelerator pedal and detecting an operator's pedaling force.

4. The sudden start preventing apparatus according to claim 1,
wherein an in-vehicle controller mounted on the vehicle is connected to the controller, and
the controller prohibits the actuator from being driven based on an input of a travel signal from the in-vehicle controller, the travel signal indicating that the vehicle is traveling.

5. The sudden start preventing apparatus according to claim 1,
wherein the signal comparing unit measures a duration time during which the detection signal is equal to or greater than the threshold value, and
the controller drives the actuator to push the acceleration pedal back in a direction opposite to an operating direction of the acceleration pedal when the signal comparing unit determines that the detection signal is equal to or greater than the threshold value and that the duration time is equal to or greater than a predetermined time.
